# EUROPÄISCHE PATENTANMELDUNG

(11) **EP 1 609 591 A1**
(43) Veröffentlichungstag der Anmeldung: **28.12.2005**
(21) Anmeldenummer: 05011098.0
(22) Anmeldetag: 23.05.2005
(51) Int. Cl.: B32B 17/10, E06B 3/58

(54) **Verbundsicherheitsglaselement**

(30) Priorität: 21.06.2004 DE 102004029766
(71) Anmelder: DORMA GmbH + Co. KG, 58256 Ennepetal (DE)
(72) Erfinder: Vogler, Thomas, 32105 Bad Salzuflen (DE)

(57) **Zusammenfassung**

Verbundsicherheitsglaselement mit mindestens zwei miteinander verklebten Glaselementen, mit zumindest einer Folie, die zwischen den Glaselementen angeordnet ist, wobei die Glaselemente in Verbindungsbereichen gestuft angeordnet sind.

## Beschreibung

Die Erfindung betrifft ein Verbundsicherheitsglaselement (VSG-Element) gemäß dem Oberbegriff des Anspruches 1.

Verbundsicherheitsgläser bestehen aus zwei oder mehr, durch eine PVB-Folie verbundenen Glaselementen. Bei der Verklebung solcher Elemente ist sicherzustellen, dass jedes Einzelglas mit einer tragenden Klebefuge verbunden wird. Dabei ist eine einfache stirnseitige Verklebung mitunter ungeeignet.

Es ist daher Aufgabe der vorliegenden Erfindung, ein Verbundsicherheitsglaselement zu schaffen, dessen Glaselemente sicher und dauerhaft miteinander verklebbar sind.

Die Lösung dieser Aufgabe erfolgt durch die Merkmale des Anspruches 1.

Erfindungsgemäß werden Einzelscheiben, z. B. mit unterschiedlichen Außenmaßen, für ein Verbundsicherheitsglaselement eingesetzt. Durch diese Verwendung von Stufen-Verbundsicherheitsglas ist die Herstellung der Verklebung jeder Einzelscheibe möglich. Der Vorteil dieser Konstruktion besteht in der gestuften Anordnung der Verbundsicherheitsgläser. Die Ausbildung der gestuften Anordnung der Einzelscheiben kann dabei z. B. aus drei gleich langen Einzelgläsern bestehen, die miteinander verklebt werden. Im anderen Fall werden eine lange und zwei kürzere Einzelscheiben, die entweder an der oberen oder unteren Stirnseite versetzt angeordnet sind, mit einer tragenden Klebefuge verbunden.

Daraus ergibt sich der Vorteil, dass durch Verwendung von Stufen-Verbundsicherheitsglas die Herstellung der Verklebung jeder Einzelscheibe gezielt möglich ist. So kann ein kraftschlüssiger Verbund mit einem Anschlussprofil z. B. aus Aluminium oder einem geeigneten Edelstahlbauteil erfolgen. An den Stirnseiten der Gläser sind Trennprofile angeordnet, diese verhindern dabei, dass eine "Dreiseitenhaftung" des Klebestoffes und somit ein ungünstiger Spannungszustand in der Klebefuge entsteht.

Die Unteransprüche haben vorteilhafte Weiterbildungen der Erfindung zum Inhalt.

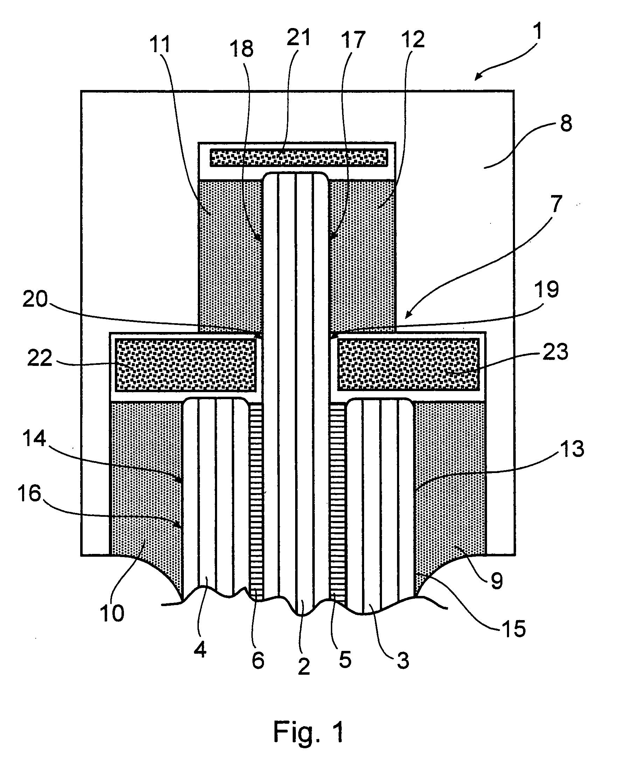

Eine Ausführungsform der Erfindung wird anhand der Figur 1 der Zeichnung nachfolgend erläutert. Die Figur 1 der Zeichnung zeigt eine schematisch vereinfachte Schnittdarstellung eines Teiles eines erfindungsgemäßen Verbundsicherheitsglaselementes 1. Das Verbundsicherheitsglaselement 1 weist z. B. Glasscheiben 2, 3, 4 mit einer Folie 5, 6 auf, die zwischen den Glasscheiben 2, 3, 4 angeordnet sind. Die Einzelscheiben 2, 3, 4 sind im Randbereich 7 gestuft angeordnet. Sie sind mit einem Verbindungsprofil 8 durch Klebungen 9, 10, 11, 12 verbunden. Die stufenweise Anordnung ermöglicht somit die Verklebung jeder Einzelscheibe, d. h. die Glasscheibe 2 wird durch zwei Klebungen 11, 12 und die anderen Scheiben 3, 4 durch jeweils eine Klebung 9 bzw. 10 mit dem Verbindungsprofil 8 verbunden. Hierbei sind die Klebungen 9, 10, 11, 12 auf Klebebereichen 13, 14, 17, 18 von Flachseiten 15, 16, 19, 20 der Glasscheiben 2, 3, 4, die dem Verbindungsprofil 8 zugewandt sind, angeordnet.

Zwischen den Glasscheiben 2, 3, 4 und dem Verbindungsprofil 8 sind stirnseitig Trennprofile 21, 22, 23, die aus Kunststoff bestehen, angeordnet. Sie verhindern dabei, dass eine dreiseitige Haftung des Klebstoffes entsteht. Das Verbindungsprofil 8 besteht z. B. aus Aluminium oder einem geeigneten Edelstahl oder einem Metall.

### Bezugszeichenliste

- 1: Verbundsicherheitsglaselement (VSG-Element)
- 2, 3, 4: Glasscheiben
- 5,6: Folien
- 7: Verbindungsbereich
- 8: Verbindungsprofil
- 9, 10, 11, 12: Klebung
- 13,14,17,18: Klebebereich
- 15, 16, 19, 20: Flachseiten
- 21,22,23: Trennprofil

## Patentansprüche

1. Verbundsicherheitsglaselement (1)
- mit zumindest zwei miteinander verklebten Glasscheiben (2, 3, 4),
- mit zumindest einer Folie (5, 6), die zwischen den Glasscheiben (2, 3, 4) angeordnet ist,
**dadurch gekennzeichnet,**
- **dass** die Glasscheiben (2, 3, 4) in einem Verbindungsbereich (7) gestuft angeordnet sind.

2. Verbundsicherheitsglaselement nach Anspruch 1, **gekennzeichnet durch** ein Verbindungsprofil (8), mit dem die Glasscheiben (2, 3, 4) **durch** Klebungen (9, 10, 11, 12) verbunden sind.

3. Verbundsicherheitsglaselement nach Anspruch 2, **dadurch gekennzeichnet, dass** eine Glasscheibe'(2) der Glasscheiben (2, 3, 4) durch zwei Klebungen (11, 12) mit dem Verbindungsprofil (8) verbunden ist.

4. Verbundsicherheitsglaselement nach Anspruch 2 oder 3, **dadurch gekennzeichnet, dass** die Glasscheibe (2) oder die anderen Glasscheiben (3, 4) durch jeweils eine Klebung (9 bzw. 10) mit dem Verbindungsprofil (8) verbunden sind.

5. Verbundsicherheitsglaselement nach einem der Ansprüche 2 bis 4, **dadurch gekennzeichnet, dass** die Klebung (9, 10, 11, 12) auf Klebebereiche (13, 14, 17, 18) von Flachseiten (15, 16, 19, 20) der Glasscheiben (2, 3, 4), die dem Verbindungsprofil (8) zugewandt sind, angeordnet sind.

6. Verbundsicherheitsglaselement nach einem der Ansprüche 2 bis 5, **dadurch gekennzeichnet, dass** zwischen den Glasscheiben (2, 3, 4) und dem Verbindungsprofil (8) stirnseitig Trennprofile (21, 22, 23) angeordnet sind.

7. Verbundsicherheitsglaselement nach Anspruch 6, **dadurch gekennzeichnet, dass** die Trennprofile (21, 22, 23) aus Kunststoff bestehen.

8. Verbundsicherheitsglaselement nach einem der Ansprüche 2 bis 7, **dadurch gekennzeichnet, dass** das Verbindungsprofil (8) aus Aluminium besteht.

9. Verbundsicherheitsglaselement nach einem der Ansprüche 2 bis 7, **dadurch gekennzeichnet, dass** das Verbindungsprofil (8) aus Edelstahl besteht.

10. Verbundsicherheitsglaselement nach einem der Ansprüche 2 bis 9, **dadurch gekennzeichnet, dass** das Verbindungsprofil (8) als U-Profil ausgebildet ist.
